# EUROPEAN PATENT SPECIFICATION

(11) **EP 1 361 633 B1**
(45) Date of publication and mention of the grant of the patent: **30.05.2012**
(21) Application number: 02711224.2
(22) Date of filing: 25.01.2002
(51) Int. Cl.: H02B 13/02, H02B 13/075

(54) **GAS INSULATED SWITCHGEAR**
GASISOLIERTE SCHALTEINRICHTUNG
APPAREILLAGE DE COMMUTATION ISOLE AU GAZ

(30) Priority: 26.01.2001 WO PCT/JP01/00527
(43) Date of publication of application: 12.11.2003
(73) Proprietor: Hitachi, Ltd., Chiyoda-ku, Tokyo 100-8010 (JP)
(72) Inventor: TANIGUCHI, Yoichiro, c/o Power & Ind. Systems Div., Hitachi-shi, Ibaraki 316-0035 (JP); TANAKA, Toyokazu, c/o Power & Ind. Systems Div., Hitachi-shi, Ibaraki 316-0035 (JP); TSUCHIYA, Kenji, c/o Power & Ind. Systems Div., Hitachi-shi, Ibaraki 316-0035 (JP); OKABE, Mamoru, c/o Power & Ind. Systems Div., Hitachi-shi, Ibaraki 316-0035 (JP); TAKAHASHI, Kazuhiko, c/o Power & Ind. Systems Div., Hitachi-shi, Ibaraki 316-0035 (JP); YAMADA, Hitoshi, c/o Power & Ind. Systems Div., Hitachi-shi, Ibaraki 316-0035 (JP); YAMANE, Yuichiro, c/o Power & Ind. Systems Div., Hitachi-shi, Ibaraki 316-0035 (JP); HENMI, Rei, c/o Power & Ind. Systems Div., Hitachi-shi, Ibaraki 316-0035 (JP); SEYA, Yoshiaki, c/o Power & Ind. Systems Div., Hitachi-shi, Ibaraki 316-0035 (JP); MIYAMOTO, Toshihisa, c/o Power & Ind. Systems Div., Hitachi-shi, Ibaraki 316-0035 (JP); FUKUNISHI, Masayuki, c/o Power & Ind. Systems Div., Hitachi-shi, Ibaraki 316-0035 (JP)
(74) Representative: Strehl Schübel-Hopf & Partner
(86) International application number: PCT/JP2002/000559
(87) International publication number: WO 2002/067394

(56) References cited:
- WO-A-99/52119
- DE-C- 19 816 366
- JP-A- 53 106 439
- JP-A- 60 005 710
- JP-A- 60 005 710
- JP-A- 62 110 407
- JP-A- 62 241 220
- JP-U- 61 062 512
- JP-U- 63 138 813

## Description

### Technical Field

The present invention related to a gas-insulated switchgear, and more particularly to a gas-insulated switchgear is suitable for three-way disconnector-earth switching function that can take three positions of "on", "off" and "earth".

### Background Technology

A gas-insulated switchgear having three positions, earth-switching function has been known in Japanese Patent Laid-open 2000-134733 and Japanese Patent Laid-open 11-355926 (1999). In the prior art there is disclosed a three-way disconnector-earth switch function that is disposed in an expanded space formed by leaning an axis of a vessel with respect to an axis of a conductor of a gas switchgear.

In the prior art, however, a volume of the vessel is essentially to become large because the expanded space wherein a disconnector-earthing switch-switching function is located must be formed. Further, its structure has to be complicated because of disagreement between the vessel axis and conductor axis, which leads to an increase in the number of component parts.

Although the smaller size and simpler structure of the switchgear are desired, there is a limit to attain these desires, and because of its complicated structure, reliability of the switchgear tends to become low.

There is another prior art disclosed in Japanese Patent Laid-open 60-5710 (1985). This technology is concerned with a gas-insulated switchgear wherein a movable contact is disposed in a conductor connected to a voltage transformer, and the transformer is switched to "on" state by moving the movable contact.

However, this prior art simply discloses that the voltage transformer is made in a earthed state by moving the movable contact disposed in the conductor connected to the transformer; therefore, there is no disclosure about the above mentioned gas-insulated switchgear having a three-way disconnector-earth switching function. Apparently, the prior art does not take into consideration how the three-way disconnector-earth switching function is installed in compact form in the gas-insulated switchgear at all.

WO-A-99/52 119 discloses an encapsulating module with a three-position switch integrated into a current path for a gas-insulated switchgear. JP 60 005710 A discloses another conventional disconnecting switch with graunding mechanism.

Considering the above-mentioned problems, the first object of the present invention is to provide a gas-insulated switchgear that is able to downsize the switchgear as a whole by downsizing and simplification of the switchgear, even though the switchgear has the three-way disconnector-earth switching function.

The second object of the present invention is to provide a gas-insulated switchgear wherein a conductor of the movable contact for making disconnection and connection can make a correct straight-line motion.

The third object of the present invention is to provide a gas-insulated switchgear, which is capable of operating a three-way disconnector-earth switching function on each of three phase buses without disagreement therebetween.

The fourth object of the present invention is to provide a gas-insulated switchgear, which is capable of making a desired section of a necessary phase of buses "on" state, "application" state, or "earthed" state.

### Disclosure of the invention

In order to achieve these objects, the present invention provides a gas-insulated switchgear according to claim 1.

### Brief Description of the Drawings

Fig. 1 is a diagram of one example of the whole structure of a gas-insulated switchgear of the present invention.
Fig. 2 is a partial sectional view of a part of a disconnector in Fig. 1, which shows the disconnector being in "off" state.
Fig. 3 corresponds to Fig. 2, wherein the disconnector is in "on" state.
Fig. 4 corresponds to Fig. 2, wherein the disconnector is in "earth" state.
Fig. 5 is a plane view of an arrangement of three phases of three-way disconnector-earth switches of the present invention.
Fig. 6 is a sectional view of a breaker in a three-way gas-insulated switchgear to which the present invention is applied.
Fig. 7 is a diagram of another example of the whole structure of a gas-insulated switchgear of ring shaped bus type.
Fig. 8 is a plane view of Fig. 7.
Fig. 9 is a diagram of another example of the whole structure of a gas-insulated switchgear of one and a half circuit breaker type.
Fig. 10 is a plane view of Fig. 9.
Fig. 11 is a side view of an operating mechanism for the three-way disconnector-earth switch of a gas-insulated switchgear of the present invention.
Fig. 12 is a side view of Fig. 11.
Fig. 13 is a plane view of a chain mechanism constituting the operation mechanism shown in Fig. 11.

### Most Preferred Embodiments for Practicing the Invention

The gas-insulated switchgear of one example of the present invention will be explained by way of drawings.

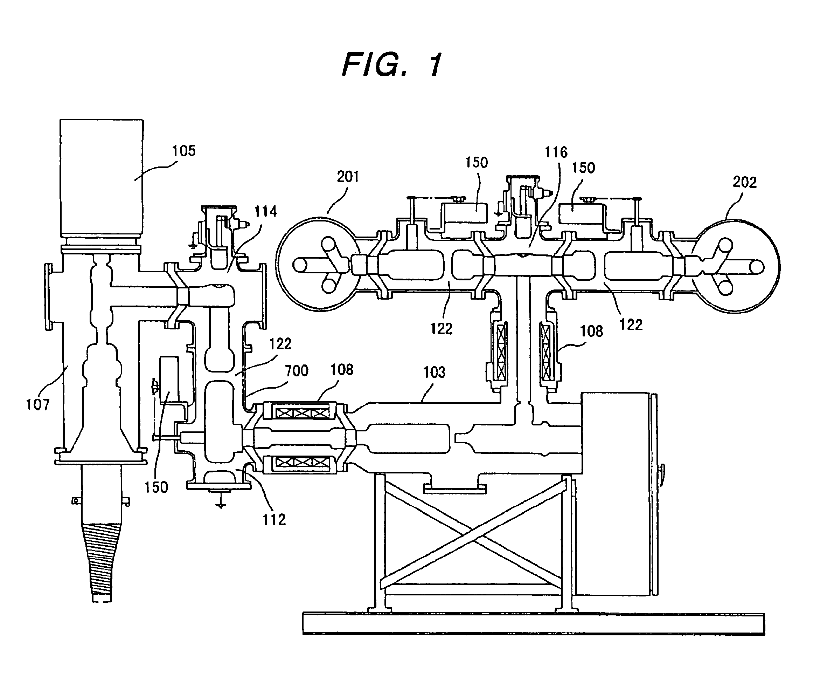

Fig. 1 is one example of the present invention, which shows a gas-insulated switchgear. As shown in Fig. 1, the gas-insulated switchgear comprises a first main bus conductor 201, a second main bus conductor 202, earth switches 112, 114, 116, gas circuit breakers 103 for switching main buses 201, 202 to "on" and "off", each of the gas circuit breaker being disposed in the tank of each phase, a disconnector 105, a cable head 107 or bushing, and a current current transformer 108, etc.

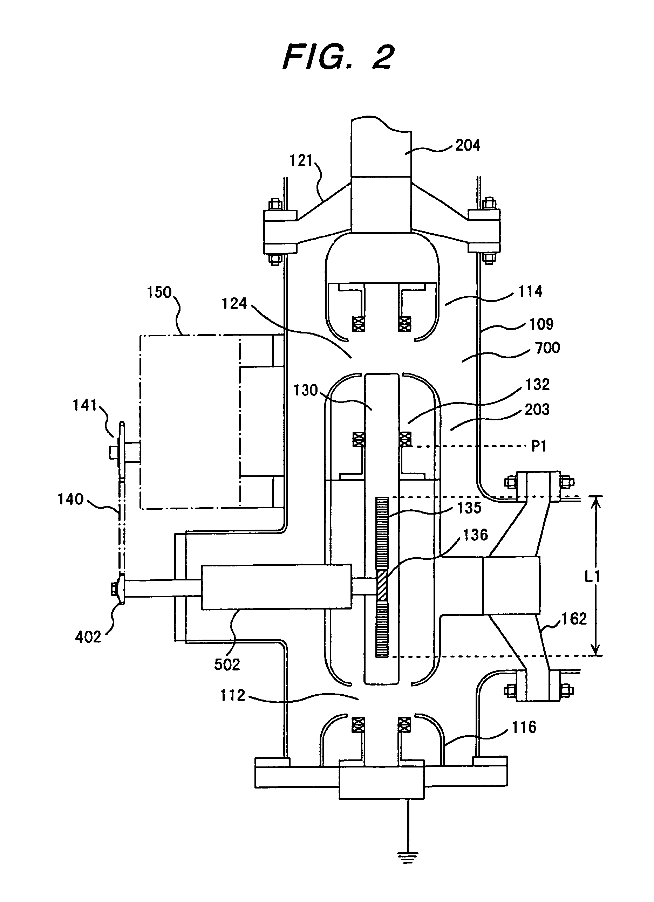

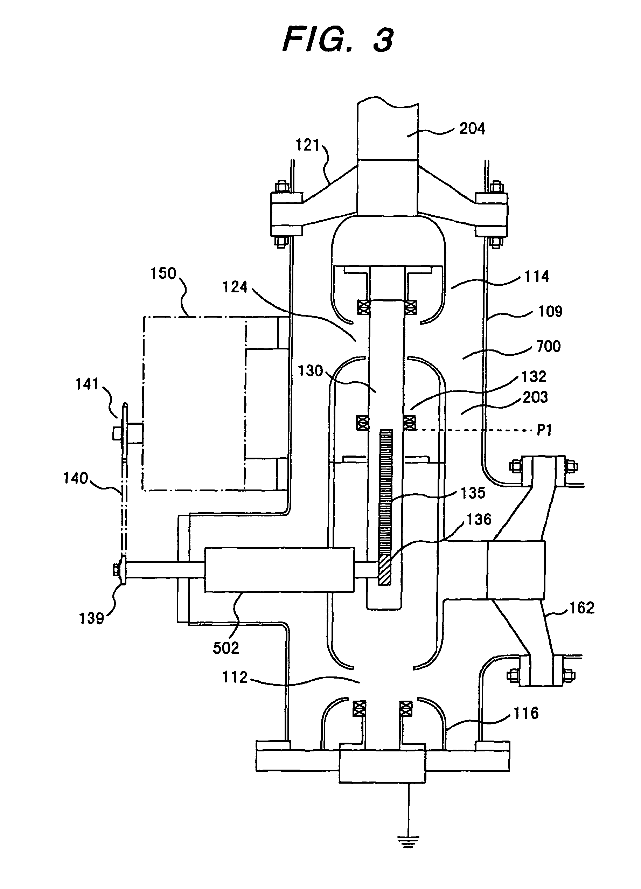

Fig. 2 is the gas-insulated switchgear of this example employs a system wherein a driving force transmission mechanism is driven by means of a chain. Figs. 2 and 3 show the operating conditions.

The gas-insulated switchgear of this example shown in Fig.1 employs a system for transmitting driving force from an operating device having a motor, which is described later to an insulating rod for operating a disconnector-earth switch.

In these drawings, the three-way disconnector-earth switch 700 has an earth switch 112 and a disconnector 124, these being disposed in an earthed tank 109, which is filled with insulating gas of the gas-insulated switchgear. A first bus conductor 204 and a second bus conductor 203 are disposed in the tank 109. The disconnector 124 is provided with a fixed collector 114, and the earth switch 112 is provided with a fixed collector 116.

When a movable contact conductor 130 moves, the disconnector 124 takes three positions of "on", "off" and "earth". A contact part 132 is made of conductive material so that it makes electric contact with the fixed collectors 114 and 116. A movable contact conductor 130 is provided with a rack gear 135, which engages with a pinion gear 136 to make a structure for transmitting driving force.

An insulating rod 502 is connected with the pinion gear 136 to transit driving force from outside. That is, the insulating rod 502 an operating device 150 through a sprocket 402, a chain 140 and a sprocket 141. When the operating device 150 is operated, driving force is mechanically transmitted to the movable contact conductor.

Insulating gas filled in the tank 109 is SF₆ or other insulating gases such as N₂, CO₂, CF₄, O₂, dried air etc or a combination of SF₆ and one or more of the other gases. If the case allows, the tank 109 can be used under vacuum.

A contact member 132 is disposed in a bus conductor 203, and a movable contact conductor 130 for switching the contact member 132 and the fixed collectors 114, 116 is slidably disposed in the bus conductor 203. A fixed collector 114 for the disconnector and a fixed collector 116 are disposed at the both ends of the movable contact conductor 130 in such a manner that they are opposed to each other. The fixed collector 116 is earthed.

The movable contact conductor 130 is provided with a rack gear 135, and the fixed collectors 114, 116, movable contact conductor 132, bus conductor 203 and the movable contact conductor 130 disposed therein are aligned coaxially in a straight line. A conductor that is branched at right angle with respect to an insulating spacer 162 supports the bus conductor 203.

In this structure, the conductor, which is branched at right angle, has a sealed structure. Conductive particles that are generated when the rack gear 135 and the pinion gear 136 engage, or when the movable contact conductor 130 and the movable contact conductor 132 engage are confined in the container to prevent them from entering the high voltage space.

That is, the rack gear 135 has a length of L1 on the movable contact conductor 130; thus the rack gear 135 having a length of L1 does not contact with the contact member 132 even if the pinion gear 136 rotates to become the state that the movable contact is contacted with the fixed collectors 114, 116.

In other words, the movable contact conductor 132 is located at a position outside of the length L1 that is the maximum length of movement of the rack gear 135. As a result, adhere of particles generated at the pinion gear 136 and rack gear 135 to the movable contact conductor 132 is prevented. Therefore, since the particles do not adhere to the movable contact, the particles generated at the pinion gear 136 and rack gear 135 do not scatter to other places; and conductive particles generated when the movable contact conductor 130 and the contact member 132 slide each other are prevented from entering the high voltage space.

In the conventional structure, there were disposed two collectors as contact members in opposing to the fixed collectors 114, 116. In this example, however, the arrangement of the contact member 132 was devised not to generate the conductive foreign matters by contacting the rack gear 135 with the contact member 132, and only one collector made of one contact member functions as contacting part of the disconnector 124 and the earth switch 112. Therefore, the foreign matters are not generated around the contact member 132 and the rack gear 135. Since the contact member 132 is designed to make a contact with the whole periphery of the movable conductor 130, the current density in the contact member 132 can be lowered.

In this Embodiment, since the contact member 132 is located at the disconnector 124 side from the view point of the bus conductor 203, current from the bus conductor 203 to the bus conductor 204 flows from the bus conductor through the contact member 132 and the contact conductor 130 that connects the contact member 132 and the fixed collector 114 to the bus conductor 204. Therefore, the flow path between the bus conductor 203 and the bus conductor 204 can be made shortest, thereby to suppress a temperature elevation due to joule heat.

Fig. 3 shows a condition that the movable contact conductor 130 moves towards the fixed collector 114 side of the disconnector 124 to be connected with each other, i.e. the "on" state of the disconnector. In this state, since the rack gear 135 is not in contact with the contact member 132, and since the foreign particles generated at the rack gear 135 does not adhere to the contact member 132, the particles do not scatter to other portions of the movable contact conductor 130 through the contact member132.

Therefore, a rated current for controlling the bus conductor 203 and the bus conductor 204 can be supplied therethrough, according to the structure of Fig. 3.

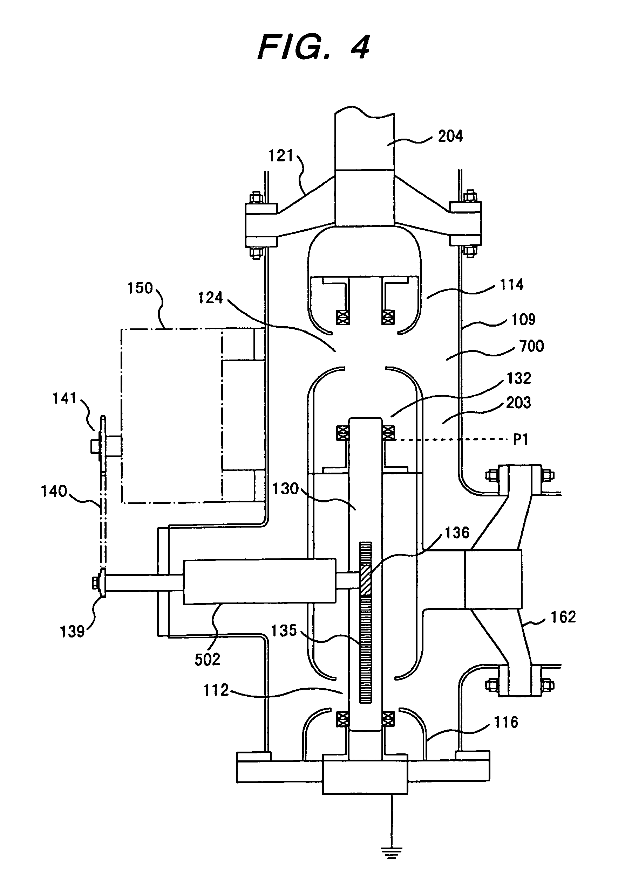

Fig. 4 shows a condition that the movable contact conductor 130 has moved towards the fixed collector 116 of the earth switch 112 to be "on" state. That is, the earth switch is in "on" state. In this condition, the rack gear 135 and the fixed collector 116 are not in contact; therefore, even if there are foreign particles in the rack gear, they do not contact with the fixed collector, and they do not scatter to other places of the fixed collector 130.

According to the structure shown in Fig. 4, since the earth switch 112 is earthed, the bus conductor is in an earthed state not to collect charges. As shown in this example, the three-way disconnector-earth switch 700 cannot switch "on", unless the disconnector switches "off". That is, the switch 700 has a mechanical interlock.

The above-mentioned insulating rod 502 is disposed in the direction perpendicular to the line where the bus conductor 203, disconnector 124 and earth switch 112 are arranged. One end of this insulating rod 502 extends to penetrate the tank 109, and a rotating seal is disposed in the gap between the tank and the rod to prevent leakage of the gas and to lower the rotating friction. The rotating motion of the insulating rod 502 is converted into a straight-line motion to operate the movable contact conductor130.

Now, a driving mechanism including the three-way disconnector-earth switch will be explained.

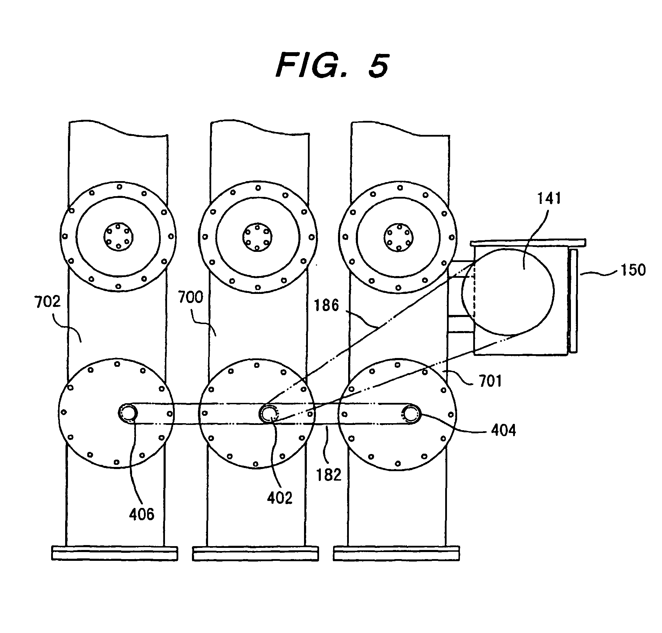

Fig. 5 shows an arrangement of the three-way disconnector-earth switches 700, 701, 702 for three phases being aligned in parallel. Sprockets 402, 404, 406, each being disposed to each of the insulating rods of the three-way disconnector-earth switches, are connected with chains 182. As same as the examples mentioned earlier, the sprocket 402 of the phase located in the center and the sprocket 141 of the operating device 150 are connected with a chain 182, whereby the driving force is transmitted from the operating device 150 to the three-way disconnector-earth switch of each phases.

As shown in this embodiment, when the chain 182 drives the insulating rods of the three-way disconnector-earth switches 700, 701, 702 of respective phases, there is no need of adjustment of axis in any directions of up, down, right and left. Further, one operating device 150 can operate the three-way disconnector-earth switches 700, 701, 702. Accordingly, since the number of operating device 150 can be decreased, and since the driving force is transmitted by a simple structure, the number of components can be reduced. Thus, the reliability is high, the gears can be supplied at low prices, and fabrication work can be saved.

The transmitting mechanism of driving force from the operating device 150 to the three-way disconnector-earth switch is not limited to the chain, and other means such as a belt driving, link driving, gear driving, shaft driving, etc may be employed.

Further, in this embodiment, the operating device 150 is connected with the chain 184 in the center phase, and the center phase is connected with the chain 182 in the power transmission of the three-way disconnector-earth switches. Thus, slackness of transmission elements due to the backrush of the chains 182, 184, etc, disconnection between the phases and non-synchronous motion of earth operation can be reduced.

Although the above embodiment has been described in connection with the phase separation bus conductor (single phase), the present invention is applicable to a three phases collective bus conductor.

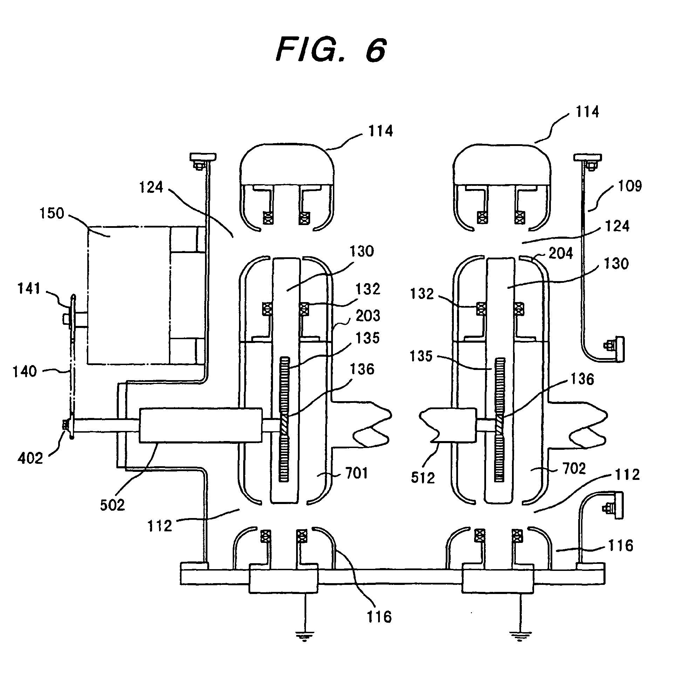

Fig. 6 shows a sectional view of a part of the three-phase collective bus conductor. There are disposed in one tank 109 the three-way disconnector-earth switches 700, 701, 702 for three phases. This three-phase collective bus conductor has the first bus conductor 204, second bus conductor 203 and third bus conductor (not shown), wherein the first to third bus conductors are arranged in a triangle the apex of which is constituted by the bus conductors when the tank is sectioned in the diametric direction. The third bus conductor (not shown) is adjoined to the first bus conductor 204. Each of the bus conductors is provided with a structure similar to the three-way disconnection-earth switch mentioned above.

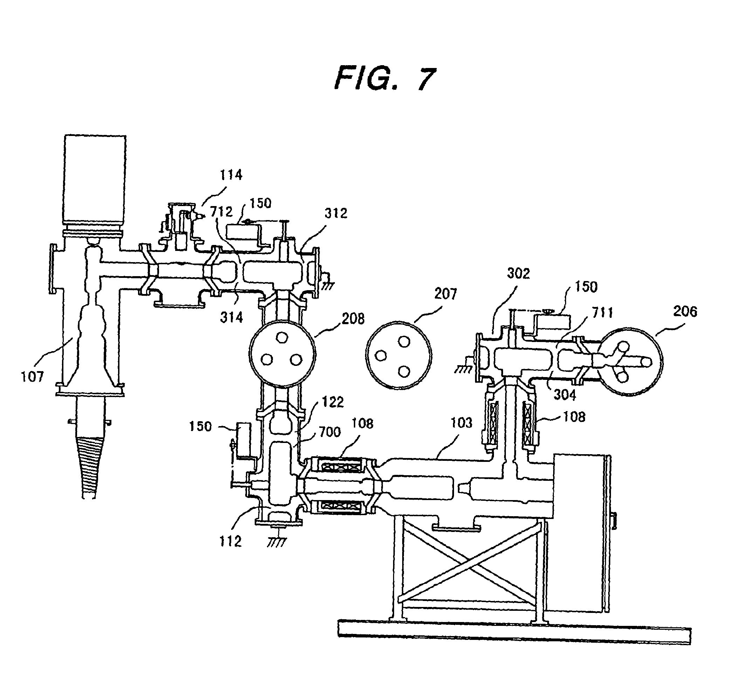

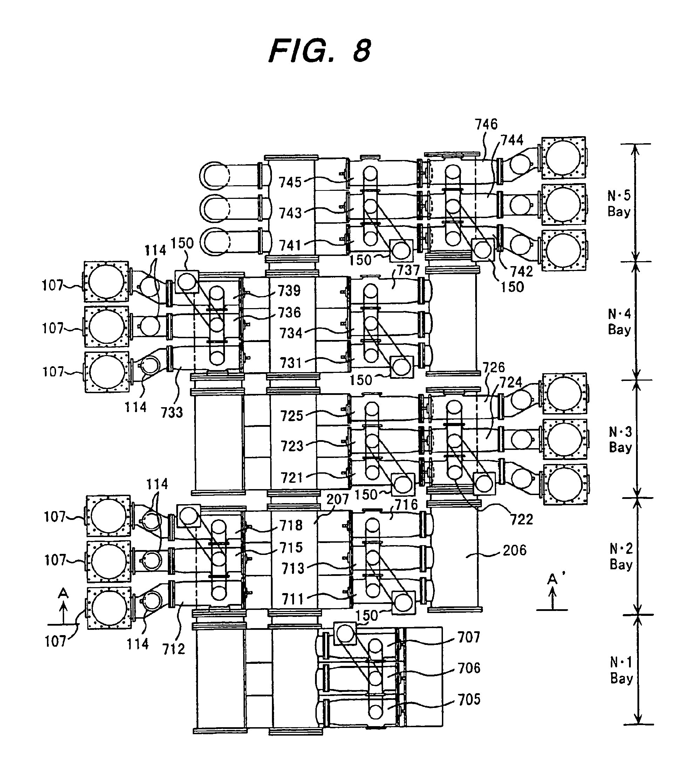

Figs. 7 to 10 show various embodiments of circuit systems to which the present invention was applied. Fig. 7 is a diagram of a gas-insulated switchgear of a ring bus system, and Fig. 8 is a top view of the gas-insulated switchgear of Fig. 7.

As shown in Fig. 8, the gas insulated switchgear is provided with No 1 Bay to No 5 Bay units. The sectional view along A - A' of No 2 Bay of Fig. 8 corresponds to the diagram of Fig. 7. In this embodiment, No 1 Bay and No 4 Bay units have the same structure, and the three-way disconnector-earth switches 711, 713, 716, 731, 737 have the same function and structure. The three-way disconnector-earth switches 712, 715, 718, 733, 736,739 have the same function and structure, too.

Further, No 3 Bay and No 5 Bay units have the same function and same structure, and the three-way disconnector-earth switches 721, 723,725, 741, 743, 745 have the same function and structure. Employment of the same three-way disconnector-earth switches makes it possible to reduce the number of components and to downsize the system as well.

In the embodiment shown in Fig. 7, the first three-way disconnector-earth switchgear 700 that is similar to the one mentioned above is disposed between the gas circuit breaker 103 and a conductor for one phase of the third three-phase collective bus conductor 208. Further, the second three-way disconnector-earth switchgear 711 that is similar to the one mentioned above is disposed between the gas circuit breaker 103 and one phase conductor of the first three-phase collective bus conductor 208. And, the third three-way disconnector-earth switchgear 712 that is similar to the one mentioned above is disposed between the cable head 107 and one phase conductor of the third three-phase collective bus conductor 208. The second three-phase collective bus conductor 207 goes through No 2 Bay unit and connects other Bay units with each other, but is not connected with No 2 Bay unit.

According to this embodiment, it is possible to maintain three states of each of the three-way disconnector-earth switches as a state of the disconnector in "off" and the earth switch in "on", a state of the disconnector in "off" and the earth switch in "off", and a state of the disconnector in "on" and the earth switch in "off", when an operation signal is given to each of the operating devices 150. As a result, when current does not flow in the cable head 107 (the cable head is not used, for example), it is possible to make a state that only the circuit in the cable head is not conductive and the first and third bus conductors are conductive, if the disconnector is made in "off" and the earth switch is made in "off" at the third and second three-way disconnector-earth switches 712, but the disconnector is in "on" at the first and second three-way disconnector-earth switches.

In another embodiment, it is possible to make an earthed state of the bus conductor at the both ends of the interrupter 103 when the interrupter 103 is "off", the disconnector of the second three-way disconnector-earth switch 711 is in "off", the earth switch is in "on", the disconnector of the first three-way disconnector-earth switch 700 is "off", the earth switch is in "on".

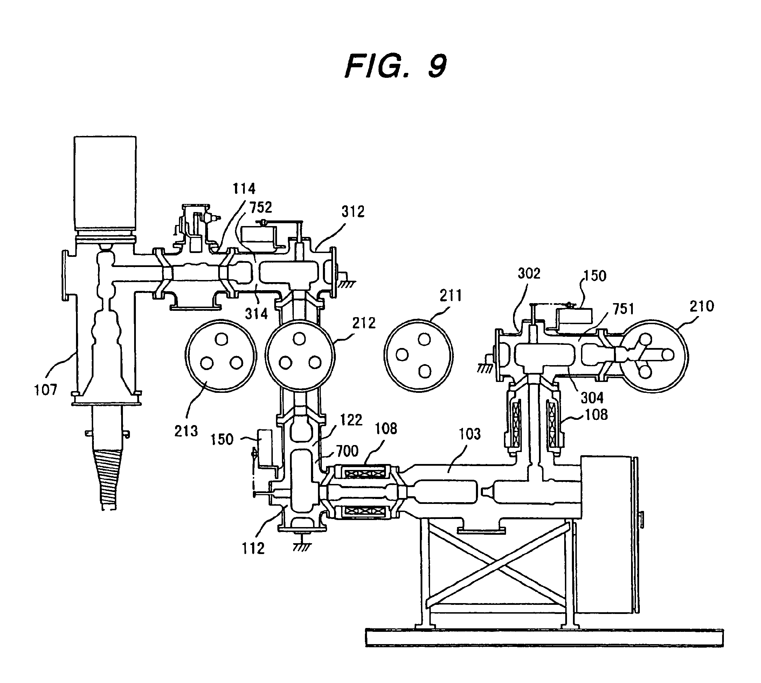

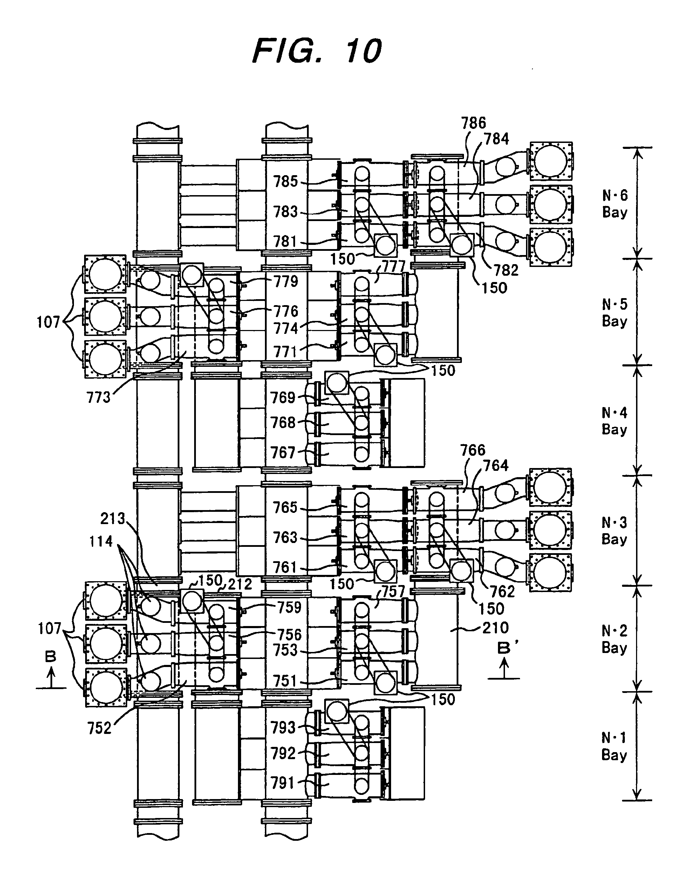

Fig. 9 is a diagram of the gas-insulated switchgear used for a one and a half circuit breaker conductor system, and Fig. 10 is the top view of the gas-insulated switchgear shown in Fig. 9. As shown in Fig. 10, there are No 1 Bay to No 6 Bay units, and the sectional view along B - B' of No 2 Bay unit corresponds to the gas-insulated switchgear shown in Fig. 9.

In this embodiment, No 2 Bay unit and No 5 Bay nits have the same structure, and the three-way disconnector-earth switches 751, 753, 757, 771, 774, 777 have the same function and same structure. And, the three-way disconnector-earth switches 753, 756, 759, 773, 776, 779 have the same function and same structure, too. Further, No 2 Bay unit and No 5 Bay units have the same structure, and the three-way disconnector-earth switches 751, 753, 757, 771, 774, 777 have the same function and same structure.

No 3 Bay unit and No6 Bay unit have the same structure, and the three-way disconnector-earth switches 761, 763, 765, 781, 782, 85 have the same function and same structure. The three-way disconnector-earth switches 762, 764, 766, 782, 784, 786 have the same function and same structure, too. When the same three-way disconnector-earth switches are employed, the number of components is made smaller and the switchgears can be downsized.

In the embodiment shown in Fig. 9, the first three-way disconnector-earth switches 700 that is the some one mentioned above is disposed between the gas circuit breaker 103 and the conductor for one phase of the third three-phase collective bus conductor 212.

The second three-way disconnector-earth switches 751 that is the some one mentioned above is disposed between the gas circuit breaker 103 and the one phase conductor of the first three-phase collective bus conductor 210. And, the third three-way disconnector-earth switch 752 that is the some one mentioned above is disposed between the cable head 107 and the one phase conductor of the third three-phase collective bus conductor 212.

In this embodiment, the three-way disconnector-earth switches for three phases are constituted into as one unit, and they are used as a vertical unit and a flat unit at positions where the bus conductors are bent.

The second three-phase collective bus conductor 211 and the fourth three-phase collective bus conductor 213 go through No 2 Bay unit and connects other Bay units with each other, but is not connected with No 2 Bay unit. Unless otherwise mentioned, the same numerals as in Figs. 7, 8 have the similar functions and similar structures.

As same as in the embodiments of Figs. 7, 8, when the cable head 107 is not active (not used), for example, the interrupter of the third three-way disconnector-earth switch 752 is made in "off", the earth switch is "off", and the disconnectors of the first and second three-way disconnector-earth switches are "on", by sending a signal to the operating device 150 of the third three-way disconnector-earth switch 752. As a result, only the cable head path can be made sleep, and the interrupter 103, the first and third three-way disconnector-earth switches 210, 212 are maintained in a conduction state.

In another embodiment, the interrupter 103 is "off", the disconnector of the second three-way disconnector-earth switch 751 is "off", the earth switch is "on", the disconnector of the first three-way disconnector-earth switch 700 is "off", and the earth switch is "on", so that the both ends of the bus conductor of the interrupter 103 can be made earthed state. Thus, inspection of the interrupter can be made easily.

Although in the above mentioned embodiment, there is shown the gas-insulated switchgears of the loop bus conductor system and one and a half circuit breaker conductor system as an embodiment which employs plural three-way disconnector-earth switches in one Bay unit, the three-way disconnector-earth switches can be disposed in the tree phase unit in the matrix arrangement for a dual bus conductor system or one and a half circuit breaker conductor.

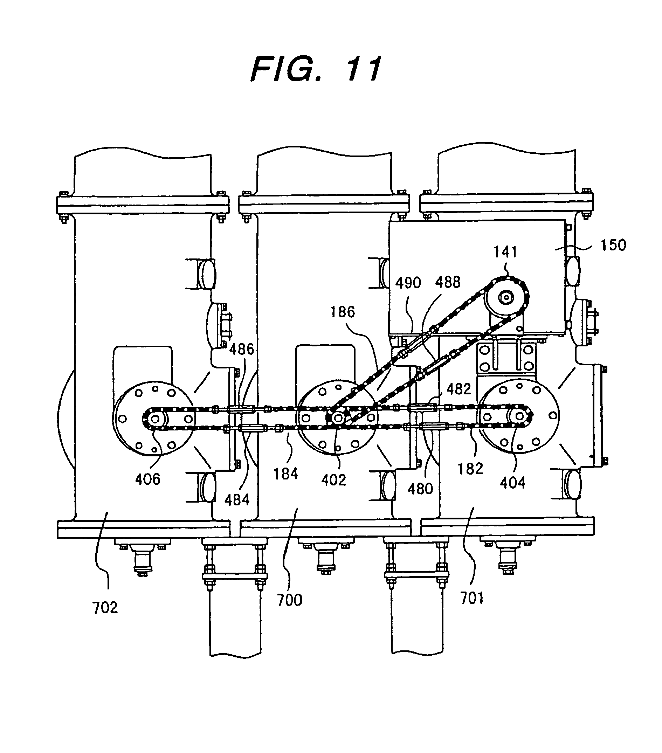

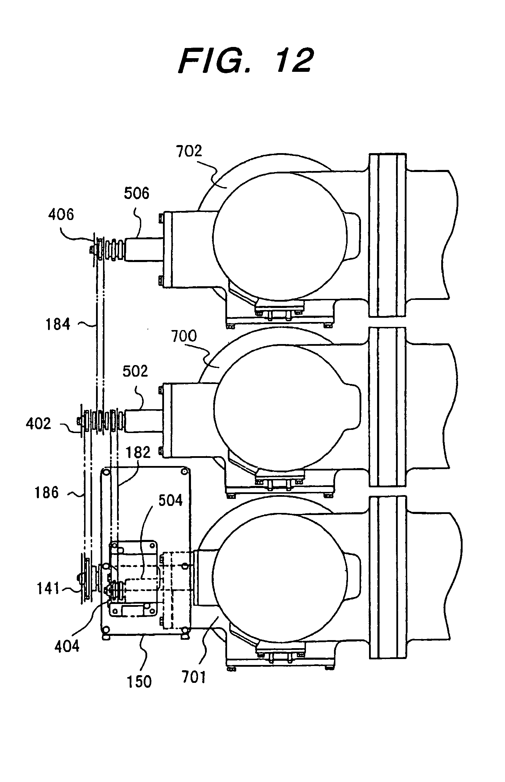

Figs. 11, 12 and 13 show the details of the operating device shown in Fig. 5. This embodiment shows that the three-way disconnector-earth switches for three phases are arranged in parallel.

The sprocket 402 connected to the insulating rod 502 of the three-way disconnector-earth switch for first phase and the sprocket 404 connected to the insulating rod 502 of the three-way disconnector-earth switch for second phase are rotated in the same direction by means of the chain 182.

The sprocket 402 connected to the insulating rod 502 of the three-way disconnector-earth switch for first phase and the sprocket 406 connected to the insulating rod of the three-way disconnector-earth switch for third phase are connected with the chain 184.

An electric motor (not shown) rotates in response to a command signal, and the rotating torque is transmitted by means of the chain from the sprocket 141 to the sprocket 402. Thus, the sprockets 402, 404, 406 rotate in the same direction, thereby to rotate the insulating rods 502, 504, 506 that are each connected to the sprockets 402, 404, 406. As a result, racks, pinions of the respective three-way disconnector-earth switches move to thereby move the movable contact conductors up and down in synchronism.

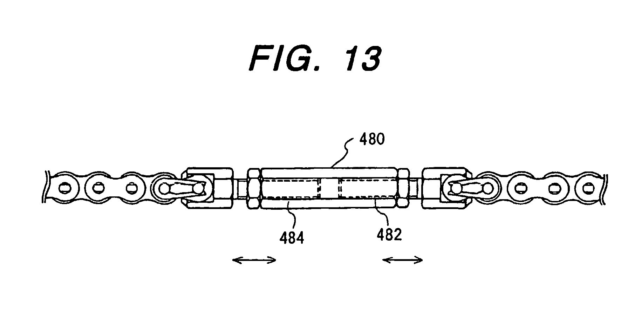

Turnbuckles 480, 482, 484, 488, 490 are disposed to the both ends of the chains 182, 184, 186, the detailed structure of which is shown in Fig. 13. There are, at both ends of the turnbuckles, screws each formed in opposite direction and bolts 482, 484 that engage with the screws. When the turnbuckles are rotated in one direction or in opposite direction, to thereby extend or shorten the distance between the bolts 482, 484 so that the length of the turnbuckles can be extended or shortened.

According to this embodiment, since the turnbuckles are disposed at the both ends of the chains, adjustment of distance between the movable contact conductors of the three-way disconnector-earth switches 700, 701 can be made by shortening or extending the whole length of the turnbuckle 480 or extending or shortening the length of the turnbuckle 482. Thus, it is possible to adjust of the positions of the movable contact conductors.

Similarly, since the whole length of the turnbuckles 488, 490 of the chain 184 or the whole length of the turnbuckles 488, 490 of the chain 186 can be adjusted, it is possible to easily adjust the rotation positions of the sprockets 141, 402, 404, 406. As a result, the positions of the movable contact conductors of the three-way disconnector-earth switches for three phases are adjusted to operate in synchronism of "on" and "off" the disconnector-earthing switches.

According to the mechanism of this embodiment, when the size of a diameter of the sprocket 141 and the size of the diameter of the sprockets 402, 404, 406 of the three-way disconnector-earth switch are adjusted, the movable contact conductors of the respective three-way disconnector-earth switches are moved in the necessary up and down directions, without turning the chains 182, 184, 186 by one cycle.

Further, even if the movable contact conductors are moved up and down, the turnbuckles 480, 482, 484, 488, 490 can be adjusted to the positions where they do not interfere with the sprockets at the both ends thereof, and the whole length of the chains can be adjusted.

### Industrial Applicability

As having been described, the present invention makes it possible that since the disconnector and the earth switch are combined by one reciprocal linear motion of the movable contact conductor, the driving and operation mechanisms that were needed for each of the disconnector and the earth switch can be united to thereby reduce the number of constituting components.

The operation of the disconnector and the earth switch can be performed with certainty by a simple structure. As a result, it is possible to downsize the gas-insulated switchgear with high reliability and to provide it at low price.

According to the gas-insulated switchgear of the present invention, since one movable contact conductor constitutes the gas-insulated switchgear having the function of the disconnector and earth switch, and since the movable contact conductor is moved in the reciprocal linear motion by the motor, it is possible to provide the gas-insulated having a mechanical interlock function.

According to the gas-insulated switchgear of the present invention, since the chains in driving the movable contact conductors of the three-way disconnector-earth switches for three phases drive the sprockets, the opening-closing mechanisms for the three-way disconnector-earth switches for three phases can be operated easily in synchronism.

Further, according to the gas-insulated switchgear of the present invention, it is possible to realize the gas-insulated switchgear of easy maintenance by keeping the necessary portions of the bus conductor as charged or earthed state.

## Claims

1. A gas insulated switchgear comprising a plurality of bus conductors (204) disposed in an earthed metal container (109, 700, 701, 702) for each phase, first fixed collectors (114) each connected with one of the plural bus conductors to constitute a disconnector (124), movable contact conductors (130) each being able to make contact with one of the fixed collectors, second fixed collectors (116) each able to being conductive with the other end of the movable contact conductors (130) to constitute an earth switch (112), a gear system (135, 136) for driving the movable contact conductors, rods (502) for driving the gear system, chains (140, 182, 184) for connecting sprockets (139, 402, 404, 406) disposed to the rods (502) of the respective phases, and a chain (186) for connecting a sprocket (402) disposed to the rod (502) and a sprocket (141) disposed to a motor (150).

2. The gas-insulated switchgear of claim 1, wherein the rod (502) located at the center among the three phases is connected with the motor (150) by means of the chain (186), whereby the movable contact conductors (130) of the respective phases are driven in the same direction.

## Patentansprüche

1. Gasisolierte Schalteinrichtung mit mehreren in einem geerdeten Metallbehälter (109, 700, 701, 702) angeordneten Sammelleitern (204) für jede Phase, erste feste Kollektoren (114), die zur Bildung eines Trennschalters (124) jeweils mit einem der mehreren Sammelleiter verbunden sind, bewegbaren Kontaktleitern (130) zum Kontakt mit jeweils einem der festen Kollektoren, zweiten festen Kollektoren (116) zur leitenden Verbindung mit dem jeweils anderen Ende der bewegbaren Kontaktleiter (130) zur Bildung eines Erdungsschalters (112), einem Antriebssystem (135, 136) zum Antrieb der bewegbaren Kontaktleiter, Stangen (502) zum Antrieb des Antriebssystem, Ketten (140, 182, 184) zum Verbinden von auf den Stangen (502) der jeweiligen Phasen angeordneten Kettenrädern (139, 402, 404, 406) und einer Kette (186) zum Verbinden eines auf der Stange (502) angeordneten Kettenrades (402) mit einem an einem Motor (150) angeordneten Kettenrad (141).

2. Gasisolierte Schalteinrichtung nach Anspruch 1, wobei die in der Mitte zwischen den drei Phasen angeordnete Stange (502) über die Kette (186) mit dem Motor (150) verbunden ist, wodurch die bewegbaren Kontaktleiter (130) der jeweiligen Phasen in gleicher Richtung angetrieben werden.

## Revendications

1. Appareil de commutation isolé par gaz comportant une pluralité de conducteurs de bus (204) disposés dans un conteneur métallique mis à la terre (109, 700, 701, 702) pour chaque phase, des premiers collecteurs fixes (114) chacun étant connecté à un conducteur parmi la pluralité de conducteurs de bus afin de constituer un sectionneur (124), des conducteurs de contact mobiles (130) chacun étant capable d'établir le contact avec l'un des collecteurs fixes, des seconds collecteurs fixes (116) chacun pouvant être conducteur avec l'autre extrémité des conducteurs de contact mobiles (130) afin de constituer un commutateur de terre (112), un système d'engrenage (135, 136) pour entraîner les conducteurs de contact mobiles, des tiges (502) pour entraîner le système d'engrenage, des chaînes (140, 182, 184) pour connecter des roues dentées (139, 402, 404, 406) disposées dans les tiges (502) des phases respectives, et une chaîne (186) pour connecter une roue dentée (402) disposée dans la tige (502) et une roue dentée (141) disposée dans un moteur (150).

2. Appareil de commutation isolé par gaz selon la revendication 1, dans lequel la tige (502) positionnée au centre entre les trois phases est connectée au moteur (150) par l'intermédiaire de la chaîne (186), les conducteurs de contact mobiles (130) des phases respectives étant entraînés dans la même direction.
